# EUROPEAN PATENT SPECIFICATION

(11) **EP 4 029 354 B1**
(45) Date of publication and mention of the grant of the patent: **19.04.2023**
(21) Application number: 20765036.7
(22) Date of filing: 08.09.2020
(51) Int. Cl.: H05B 47/105

(54) **DETERMINING AN ALTERNATIVE POSITION FOR A LIGHTING DEVICE FOR IMPROVING AN AUXILIARY FUNCTION**
BESTIMMUNG EINER ALTERNATIVEN POSITION FÜR EINE BELEUCHTUNGSVORRICHTUNG ZUR VERBESSERUNG EINER HILFSFUNKTION
DÉTERMINATION D'UNE POSITION ALTERNATIVE D'UN DISPOSITIF D'ÉCLAIRAGE POUR AMÉLIORER UNE FONCTION AUXILIAIRE

(30) Priority: 09.09.2019 EP 19196250
(43) Date of publication of application: 20.07.2022
(73) Proprietor: Signify Holding B.V., 5656 AE Eindhoven (NL)
(72) Inventor: DAMKAT, Chris, 5656 AE Eindhoven (NL); VAN DE SLUIS, Bartel, Marinus, 5656 AE Eindhoven (NL); PRONK, Bernardus, Johannes, 5656 AE Eindhoven (NL)
(74) Representative: Verweij, Petronella Daniëlle
(86) International application number: PCT/EP2020/074989
(87) International publication number: WO 2021/048072

(56) References cited:
- EP-A1- 3 328 165
- WO-A1-2017/129614
- US-A1- 2016 072 584

## Description

### FIELD OF THE INVENTION

The invention relates to a system for adapting a light plan for a certain space, said light plan specifying planned positions of a plurality of lighting devices.

The invention further relates to a method of adapting a light plan for a certain space, said light plan specifying planned positions of a plurality of lighting devices.

The invention also relates to a computer program product enabling a computer system to perform such a method.

In particular the invention relates to a system according to claim 1, a method according to claim 13 and a computer program according to claim 14. Preferred embodiments of the invention are defined by the dependent claims.

### BACKGROUND OF THE INVENTION

Lighting design is guided by standards that specify lighting levels and uniformity for certain uses of a space. In the design of a lighting solution, calculation software can be used that will calculate lighting levels in a space and can thus verify if illumination requirements have been met.

With the introduction of digital technology and connectivity in lighting hardware, the lighting infrastructure can also play a new role that goes beyond lighting. Lighting infrastructure can be fitted with sensors, beacons or optical transceivers and can thus be used for occupancy monitoring in an office building, indoor positioning in a retail store, asset tracking in a hospital, or providing internet access via Li-Fi, for example. In case a lighting system is designed for any such purpose, new requirements are added to the lighting requirements, such as coverage of the sensor network or 'visibility' of the beacons. It is a challenge to meet all these different and interacting requirements in a design simultaneously.

These illumination and other requirements interact, because moving a lighting fixture fitted with a sensor in order to optimize sensing coverage will also impact the design from an illumination perspective. For the design of Wi-Fi networks, software like iBwave Design exists. However, in case an integrated solution is needed for lighting and beyond lighting design, it is more difficult to find solutions, as such tooling does not exist.

WO 2017/129614 A1 discloses a Software Defined Control (SDC) system that, subject to its light plan and the lighting scenes stipulated therein, can consult a network management system and dynamically configure communication paths, e.g. one or more data forwarding devices, through a communication network to a lighting control component that is connected to a network border component and that is deemed suitable to emit data embedded in light waves to a detector comprised in or at least communicatively coupled to a data communication end node. In an embodiment, should the requirements set out in the communication plan conflict with those defined in the light plan, either because the lighting requirements according to the light plan change or because the mobile receivers change positions and the communication plan is adapted, the SDC system may apply a suitable mitigation strategy to optimally serve both requirements as set out in the communication plan and in the light plan.

A drawback of the system of WO 2017/129614 A1 is that although the SDC system may be able to serve both requirements as set out in the communication plan and in the light plan as good as possible, certain limitations in the design may prevent an even better solution from being realized.

### SUMMARY OF THE INVENTION

It is a first object of the invention to provide a system, which can be used to enable lighting devices to perform one or more auxiliary functions better.

It is a second object of the invention to provide a method, which can be used to enable lighting devices to perform one or more auxiliary functions better.

In a first aspect of the invention, a system for adapting a light plan for a certain space, said light plan specifying planned positions of a plurality of lighting devices, comprises at least one input interface, at least one output interface, and at least one processor configured to use said at least one input interface to obtain said light plan and determine one or more auxiliary functions of one or more of said plurality of lighting devices in said light plan.

The at least one processor is further configured to determine an alternative position for at least one of said one or more lighting devices based on a position determination function, such that said one or more lighting devices can better perform said one or more auxiliary functions with said at least one lighting device in said alternative position instead of said planned position, adapt said received light plan, said adapted light plan specifying said alternative position for said at least one lighting device, and use said at least one output interface to output said adapted light plan.

By not restricting the system to a light plan that has only been designed with lighting in mind, alternative positions can be determined for one or more of the lighting devices in order to allow one or more auxiliary functions to be performed better. A light plan may thus be designed in a conventional manner and then automatically adapted to improve the performance of one or more auxiliary functions. Said one or more auxiliary functions may include one or more of: Internet access based on light communication, information access based on light communication, infrared communication, Li-Fi, indoor positioning based on visible light communication, presence detection, people tracking, object tracking, emergency detection, air quality detection, activity detection, and audio scene analysis.

The light plan may have been determined based on light level criteria for the certain space or may simply have been generated based on standard ceiling/luminaire layouts or based on a light plan for a similar building in which case the light level criteria have become implicit.

Said at least one processor may be configured to use said at least one input interface to receive user-specified requirements for said one or more auxiliary functions and determine said alternative position for said at least one lighting device based on said user-specified requirements. Said user-specified requirements may indicate one or more areas of said space in which at least one of said one or more auxiliary functions should be available and/or may indicate a priority for at least one of said one or more auxiliary functions, for example.

Although it may also be possible to automatically/pro-actively calculate whether for a given light plan one or more auxiliary functions can be enabled easily (without too many light plan adjustments), i.e. without using user input, the use of user-specified requirements allows the performance of the one or more auxiliary functions to be increased to the extent that is desired by the user. Performance of an auxiliary function does not need to be increased if it is not desired, especially if it makes the illumination less optimal. The user-specified requirements may be specified by a customer of a designer who uses the system, for example.

Said at least one processor may be configured to use said at least one output interface to visualize a performance level of at least one of said one or more auxiliary functions over a visual representation of said adapted light plan. This helps a user check whether the performance of the auxiliary functions is as desired. Said performance level may be visualized by indicating in said visual representation of said adapted light plan in which areas of said space performance of said at least one auxiliary function meets a minimum performance level (also referred to as a "coverage map"), for example.

Said at least one processor may be configured to determine said performance level based on user-specified requirements for said one or more auxiliary functions. User-specified requirements allow the performance of the one or more auxiliary functions to be increased (only) to the extent that is desired by the user.

Said at least one processor may be configured to use said at least one input interface to allow a user to make further adjustments to said light plan. This may be beneficial if the automatic improvement of the performance of the one or more auxiliary function can still be improved further, e.g. the user may determined that certain application requirements and/or user-specified requirements are not sufficient or too restrictive. The user may be the designer who uses the system, for example.

Said at least one processor may be configured to use said at least one input interface to allow a user to adjust user-specified requirements for said one or more auxiliary functions. This may be beneficial, for example, if the user discovers that the user-specified requirements are not sufficient or too restrictive, e.g. after seeing a visualization of the performance level(s). The user may be, for example, the designer who uses the system for adapting the light plan, e.g. on behalf of its customer, or the customer itself.

Said at least one processor may be configured to determine said alternative position for said at least one lighting device based on application requirements, said application requirements including one or more of: communication signal strength, communication bandwidth, positioning accuracy, detection accuracy, tracking accuracy, sensor coverage and sensor accuracy. These application requirements are not specified by the user, e.g. by the designer who uses the system or by the customer of the designer. Application requirements may be used instead of user-specified requirements, but it is beneficial to use them in addition to user-specified requirements. For example, mobile devices typically need a certain minimum (e.g. Li-Fi) communication signal strength to work well and this communication signal strength could be specified in the application requirements.

Said at least one processor may be configured to use said at least one output interface to present said adapted light plan to a user. The impact of offering the one or more auxiliary function(s) on the costs and/or installation of the lighting system may displayed as part of this presentation. Additionally or alternatively, said at least one processor may be configured to use said at least one input interface to receive feedback from said user in response to said presentation of said light plan.

In a second aspect of the invention, a method of adapting a light plan for a certain space, said light plan specifying planned positions of a plurality of lighting devices, comprises obtaining said light plan and determining one or more auxiliary functions of one or more of said plurality of lighting devices in said light plan.

Said method further comprises determining an alternative position for at least one of said one or more lighting devices based on a position determination function, such that said one or more lighting devices can better perform said one or more auxiliary functions with said at least one lighting device in said alternative position instead of said planned position, adapting said received light plan, said adapted light plan specifying said alternative position for said at least one lighting device, and outputting said adapted light plan. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for adapting a light plan for a certain space, said light plan specifying planned positions of a plurality of lighting devices.

The executable operations comprise obtaining said light plan, determining one or more auxiliary functions of one or more of said plurality of lighting devices in said light plan, determining an alternative position for at least one of said one or more lighting devices based on a position determination function, such that said one or more lighting devices can better perform said one or more auxiliary functions with said at least one lighting device in said alternative position instead of said planned position, adapting said received light plan, said adapted light plan specifying said alternative position for said at least one lighting device, and outputting said adapted light plan.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of a first embodiment of the system;
Fig. 2 is a block diagram of a second embodiment of the system;
Fig. 3 shows an example of coverage areas of an auxiliary function of lighting devices arranged according to a light plan;
Fig. 4 shows an example of coverage areas of the auxiliary function of the lighting devices of Fig. 3 after an automatic adaptation of the light plan;
Fig. 5 shows an example of coverage areas of the auxiliary function of the lighting devices of Fig. 4 after a manual adjustment of the adapted light plan;
Fig. 6 depicts an example of a general architecture of software executing on the system;
Fig. 7 is a flow diagram of a first embodiment of the method;
Fig. 8 is a flow diagram of a second embodiment of the method;
Fig. 9 is a flow diagram of a third embodiment of the method;
Fig. 10 is a flow diagram of a fourth embodiment of the method;
Fig. 11 is a flow diagram of a fifth embodiment of the method; and
Fig. 12 is a block diagram of an exemplary data processing system for performing the method of the invention.

Corresponding elements in the drawings are denoted by the same reference numeral.

### DETAILED DESCRIPTION OF THE EMBODIMENTS

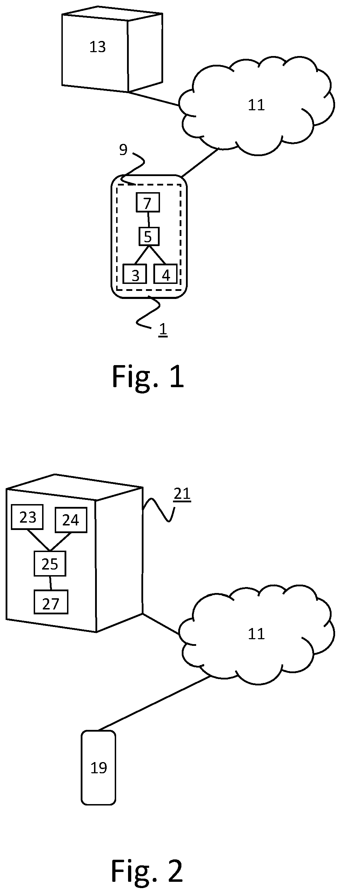

**Fig. 1** shows a first embodiment of the system for adapting a light plan for a certain space. The light plan specifies planned positions of a plurality of lighting devices and may have been determined based on light level criteria for the certain space. In the embodiment of **Fig. 1****,** the system is a mobile device **1.** The mobile device **1** is connected to the Internet **11,** e.g. via a wireless LAN access point or a cellular communication network. An Internet server **13** is also connected to the Internet **11.**

The mobile device **1** comprises a receiver **3,** a transmitter **4,** a processor **5,** memory **7** and a display **9.** The processor **5** is configured to use the receiver **3** to receive the light plan or data that allow automatic generation of the light plan, e.g. from the Internet server **13,** and determine one or more auxiliary functions of one or more of the lighting devices in the light plan. The one or more auxiliary functions may include, for example, one or more of: Internet access based on light communication, information access based on light communication, Li-Fi, indoor positioning based on visible light communication, presence detection, people tracking, object tracking, emergency detection, air quality detection, activity detection, and audio scene analysis. Light communication may comprise visible light communication and/or communication that is not visible to the human eye, e.g. infrared communication.

The processor **5** is further configured to determine an alternative position for at least one of the one or more lighting devices based on a position determination function, such that the one or more lighting devices can better perform the one or more auxiliary functions with the at least one lighting device in the alternative position instead of the planned position, adapt the received light plan, and use the display **9** or the transmitter **4** to output the adapted light plan, e.g. to Internet sever **13.** The adapted light plan specifies the alternative position for the at least one lighting device.

Advanced digital lighting infrastructures enable a wide range of possible applications, such as Li-Fi, Visible Light Communication (VLC)-based indoor positioning, presence detection, people tracking, activity detection, and audio scene analysis. Those non-illumination applications have specific requirements and therefore complicate the (automatic) generation of a light plan. With the above-described system, the challenge of optimizing different dependent design aspects simultaneously, in different or disconnected software packages may be overcome. For example, the impact of changing the design to accommodate an application that requires beaconing may be validated at the same time as the lighting requirements, and a solution that is optimized for both criteria may be achieved more easily.

The following features may be implemented, for example, in the mobile device **1:**
- Visualization of coverage maps for certain applications, e.g. applications that require light levels, sensing, and/or beaconing coverage.
- The ability to do an integral design by use of interfaces between software or integration within one software solution.
- A user interface that simplifies the design problem, for instance, by visualizing the impact of changes required to support one or more non-illumination application(s) and enabling the user to select one or more applications.
- The repurposing of lighting calculation software for sensing or visual beaconing coverage.

In the embodiment of **Fig. 1****,** the processor **5** is configured to determine the alternative position for the at least one lighting device based on application requirements. The application requirements include one or more of: communication signal strength, communication bandwidth, positioning accuracy, detection accuracy, tracking accuracy, sensor coverage and sensor accuracy. The application requirements may be obtained from the Internet server **13,** for example.

In the embodiment of **Fig. 1****,** the display **9** is a touchscreen display and the processor **5** is further configured to use the display **9** to visualize a performance level of at least one of the one or more auxiliary functions over a visual representation of the adapted light plan, e.g. visualize the above-mentioned coverage map, and allow a user to make further adjustments to the light plan. In an alternative embodiment, the user is not able to make further adjustments to the light plan before the processor **5** outputs the light plan.

In the embodiment of the mobile device **1** shown in **Fig. 1****,** the mobile device **1** comprises one processor **5.** In an alternative embodiment, the mobile device **1** comprises multiple processors. The processor **5** of the mobile device **1** may be a general-purpose processor, e.g. from ARM or Qualcomm or an application-specific processor. The processor **5** of the mobile device **1** may run an Android or iOS operating system for example. The display **9** may comprise an LCD or OLED display panel, for example. The memory **7** may comprise one or more memory units. The memory **7** may comprise solid state memory, for example.

The receiver **3** and the transmitter **4** may use one or more wireless communication technologies such as Wi-Fi (IEEE 802.11) to communicate with an access point to the Internet **11,** for example. In an alternative embodiment, multiple receivers and/or multiple transmitters are used instead of a single receiver and a single transmitter. In the embodiment shown in **Fig. 1****,** a separate receiver and a separate transmitter are used. In an alternative embodiment, the receiver **3** and the transmitter **4** are combined into a transceiver. The mobile device **1** may comprise other components typical for a mobile device such as a battery, a camera and a power connector. The invention may be implemented using a computer program running on one or more processors.

In the embodiment of **Fig. 1****,** the system is a mobile device. In an alternative embodiment, the system of the invention is a different device, e.g. a computer. In the embodiment of **Fig. 1****,** the system of the invention comprises a single device. In an alternative embodiment, the system of the invention comprises a plurality of devices.

**Fig. 2** shows a second embodiment of the system for adapting a light plan for a certain space. In the embodiment of **Fig. 2****,** the system is a computer **21.** The computer **21** is connected to the Internet **11** and acts as a server. The computer **21** comprises a receiver **23,** a transmitter **24,** a processor **25,** and storage means **27.**

The processor **25** is configured to use the receiver **23** to receive the light plan or data that allows automatic generation of the light plan, e.g. from a mobile device **19,** and is configured to determine one or more auxiliary functions of one or more of the lighting devices in the light plan. The one or more auxiliary functions may include, for example, one or more of: Internet access based on visible light communication, Li-Fi, indoor positioning based on visible light communication, presence detection, people tracking, activity detection, and audio scene analysis.

The processor **25** is further configured to and determine an alternative position for at least one of the one or more lighting devices based on a position determination function, such that the one or more lighting devices can better perform the one or more auxiliary functions with the at least one lighting device in the alternative position instead of the planned position, adapt the received light plan, and use the transmitter **24** to output the adapted light plan. The adapted light plan specifies the alternative position for the at least one lighting device. The adapted light plan may be transmitted to the mobile device **19,** for example.

In addition to determining an alternative position for at least one of the one or more lighting devices, an alternative type/model may be determined for at least one of the one or more lighting devices to improve the performance of the one or more auxiliary functions. An alternative position and alternative type/model may even be determined for the same lighting device.

In the embodiment of **Fig. 2****,** the processor **25** is further configured to use the receiver **23** to receive user-specified requirements for the one or more auxiliary functions from the mobile device **19** and determine the alternative position for the at least one lighting device based on the user-specified requirements.

In the embodiment of the computer **21** shown in **Fig. 2****,** the computer **21** comprises one processor **25.** In an alternative embodiment, the computer **21** comprises multiple processors. The processor **25** of the computer **21** may be a general-purpose processor, e.g. from Intel or AMD, or an application-specific processor. The processor **25** of the computer **21** may run a Windows or Unix-based operating system for example. The storage means **27** may comprise one or more memory units. The storage means **27** may comprise one or more hard disks and/or solid-state memory, for example. The storage means **27** may be used to store an operating system, applications and application data, for example.

The receiver **23** and the transmitter **24** may use one or more wired and/or wireless communication technologies such as Ethernet and/or Wi-Fi (IEEE 802.11) to communicate with an access point to the Internet **11,** for example. In an alternative embodiment, multiple receivers and/or multiple transmitters are used instead of a single receiver and a single transmitter. In the embodiment shown in **Fig. 2****,** a separate receiver and a separate transmitter are used. In an alternative embodiment, the receiver **23** and the transmitter **24** are combined into a transceiver. The computer **21** may comprise other components typical for a computer such as a power connector and a display. The invention may be implemented using a computer program running on one or more processors.

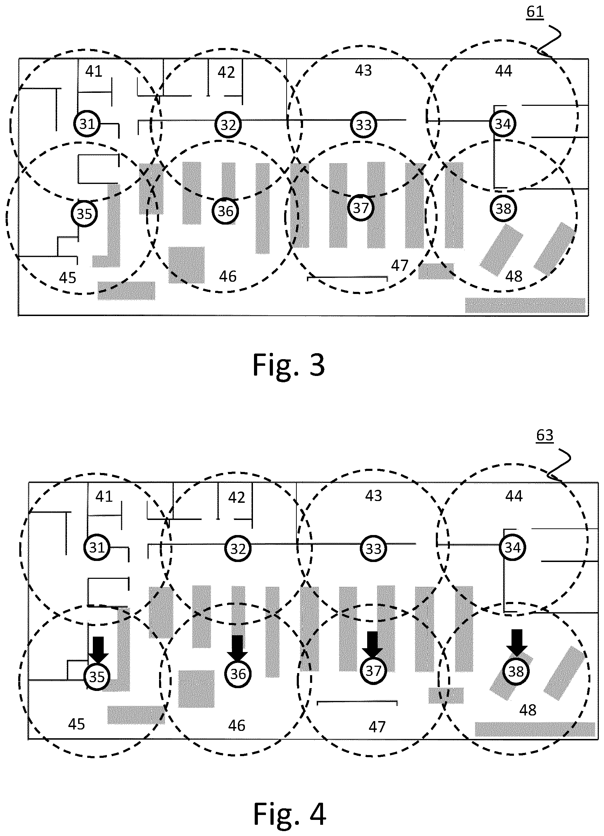

**Fig. 3** shows an example of coverage areas **41-48** of an auxiliary function (e.g. Li-Fi) of lighting devices **31-38** arranged according to a light plan **61.** Lighting devices **35** to **38** have been placed at a certain distance from the door and windows at the front of the building, as the areas close to the door and windows receive enough daylight. However, as a result, the (e.g. Li-Fi) coverage areas **41-48** do not cover the areas close to the door and windows.

**Fig. 4** shows an example of the coverage areas **41-48** of the auxiliary function of the lighting devices **31-38** of **Fig. 3** after an automatic adaptation of the light plan. With the automatic adjustment of the light plan, as described in relation to **Figs. 1** and **2****,** the positions of the lighting devices **35-38** are moved closer to the door and windows. This results in an adapted light plan **63** with improved (e.g. Li-Fi) coverage, albeit at the cost of a lower illumination in certain (small) areas.

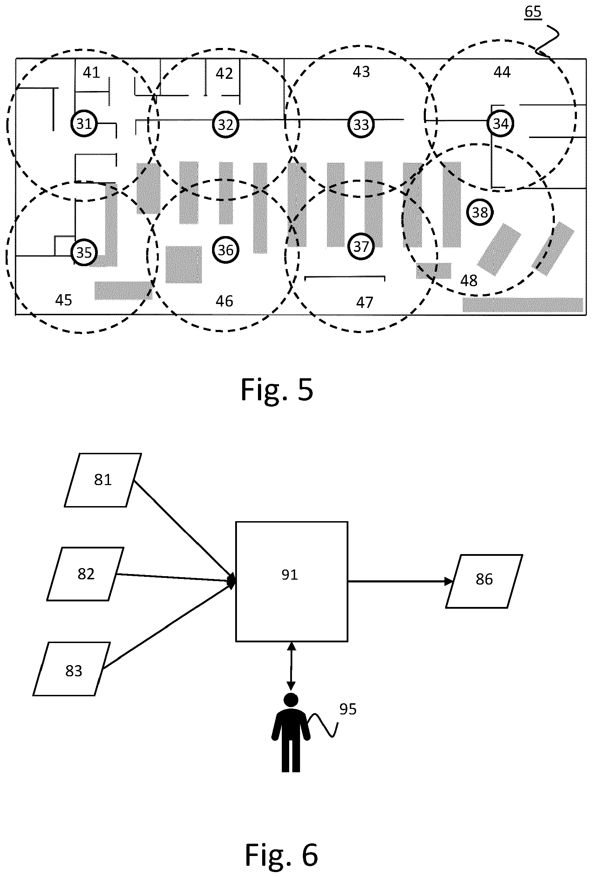

**Fig. 5** shows an example of coverage areas **41-48** of the auxiliary function of the lighting devices **31-38** of **Fig. 4** after a manual adjustment of the automatically adapted light plan **63.** If the user/designer is not entirely satisfied with the automatic adaptation of the light plan, he may be able to change some of the positions of the lighting devices manually. In the example of **Fig. 5****,** the user/designer has decided that (e.g. Li-Fi) coverage in the corner near coverage area **48** is less important than (e.g. Li-Fi) coverage in the gap between coverage areas **43,44,47** and **48** and has therefore moved the position of lighting device **38** closer to the positions of lighting devices **33,34** and **37,** resulting in an adjusted light plan **65.**

**Fig. 6** depicts an example of a general architecture of software executing on the system, e.g. the mobile device **1** of **Fig. 1** **or** the computer **21** of **Fig. 2****.** A digital design assistant **91,** which is a software tool, is used by a designer **95.** The digital design assistant **91** receives application requirements **81,** user-specified requirements **82** and a light plan **83** as inputs and produces an adapted light plan **86** as output. The user-specified requirements **82** have been specified by a customer of the designer **95.**

The application requirements may include, for example, one or more of: Lighting level & uniformity;
RF-communication signal strength;
RF-communication bandwidth;
Positioning accuracy;
Detection accuracy;
Tracking accuracy;
Temperature & Humidity coverage and accuracy; and
Noise level measurement accuracy

The digital design assistant **91** performs lighting calculations and additional performance calculations. It may be possible to perform both the lighting calculations and some or all of the additional performance calculations using a single lighting calculation engine. For example, for visual beaconing in indoor positioning or data transfer in Li-Fi, the 'signal' strength is directly related to the lighting level. Hence, the standard lighting calculation used for determining lighting levels is typically a good basis for calculating the spatial performance or coverage of indoor positioning or Li-Fi. Similarly, the sensor coverage area may be calculated using a lighting calculation in which the angular sensitivity of the sensor is used as a lighting distribution.

In these calculations, the original light plan may be `masked', as only a subset of the lighting fixtures might contain the functionally being evaluated, i.e. not every lighting fixture is Li-Fi or VLC enabled. Specifically, for VLC, it may be required that multiple, i.e. at least 3 lighting fixtures are visible. In this case, multiple lighting calculations may be performed to separate the contributions of each fixture.

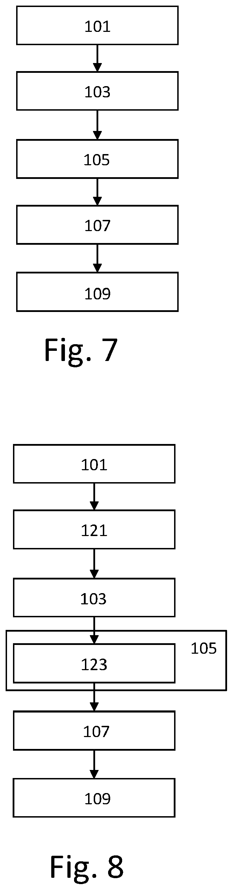

A first embodiment of the method of adapting a light plan for a certain space is shown in **Fig. 7****.** The light plan specifies planned positions of a plurality of lighting devices and may have been determined based on light level criteria for the certain space. A step **101** comprises obtaining the light plan. A light plan is normally determined based on information about the area (e.g. a Building Information Model) and further input about the purpose of the area and/or specific user requirements with regards to the illumination function.

Typically, a light plan specifies the lay-out of all lighting-related devices, such as the position and orientation of lighting devices, (integrated) sensor devices and UI devices (e.g. switches, dimmers, control panels). The light plan may be received from an external source, but it may also be generated in step **101.** It is also possible that the light plan has been generated and stored previously, and that later the light plan is reloaded in order to evaluate how well the light plan is able to support the non-illumination applications.

A step **103** comprises determining one or more auxiliary functions of one or more of the lighting devices in the light plan. These one or more auxiliary functions may in general be determined based on received application requirements or user-specified requirements, for example. In the embodiment of **Fig. 7****,** no application requirements or user-specified requirements are received, and all supported auxiliary functions are therefore selected/determined.

Step **105** comprises determining an alternative position for at least one of the one or more lighting devices based on a position determination function, such that the one or more lighting devices can better perform the one or more auxiliary functions with the at least one lighting device in the alternative position instead of the planned position.

First, the light plan is analyzed to determine how well it is suited to support the determined auxiliary function(s), such as Li-Fi, VLC-based indoor positioning, presence detection, people tracking, activity detection, and/or audio scene analysis. This analysis may determine the performance of such applications for any position in the area, such that a so-called "performance map" can be generated for one or more of the functions, indicating at which positions the performance level for the application is of high, medium or low quality.

The position determination function evaluates the performance of different combinations of lighting device positions and selects the combination with the best performance of the selected (non-lighting) applications. In a simple implementation, the performance of all combinations of lighting device positions may be determined, but preferably, some intelligence is used to reduce the required computational complexity, e.g. by using a known (multi objective) optimization algorithm. It may be possible to use a lighting calculation engine to implement the position determination function, but with other parameters, e.g. by specifying angular sensitivity of a sensor instead of a lighting distribution.

Step **107** comprises adapting the received light plan. The adapted light plan specifies the alternative position for the at least one lighting device. Step **109** comprises outputting the adapted light plan.

In the embodiment of **Fig. 7****,** the illumination function is taken into account in step **105.** For example, an alternative position at which a lighting device would not contribute to the desired illumination can be avoided. In an alternative embodiment, light levels are checked as part of step **107** or in a separate step between steps **107** and **109.** If the use of the alternative position(s) results in required/desired light levels not being met, then this alternative position is avoided, e.g. step **105** may be repeated. In a variant on this alternative embodiment, one or more additional lighting devices may be added if required/desired light levels are not being met as long as these additional lighting devices still contribute to the desired illumination. This may be beneficial, because density requirements for lighting and auxiliary function might differ, e.g. more lighting devices may be needed to offer good Li-Fi than to meet lighting requirements.

A second embodiment of the method of adapting a light plan for a certain space is shown in **Fig. 8****.** In the embodiment of **Fig. 8****,** a step **121** is performed between steps **101** and **103** of **Fig. 7** and step **105** of **Fig. 7** comprises a sub step **123.** Step **121** comprises receiving user-specified requirements for the one or more auxiliary functions. Step **123** comprises determining the alternative position for the at least one lighting device based on the user-specified requirements.

The user-specified requirements may indicate one or more areas of the space in which at least one of the one or more auxiliary functions should be available and/or indicate a priority for at least one of the one or more auxiliary functions, for example. In the embodiment of **Fig. 8****,** the user is able to indicate which non-lighting applications he would like to have supported, even before an analysis has been made in step **105.**

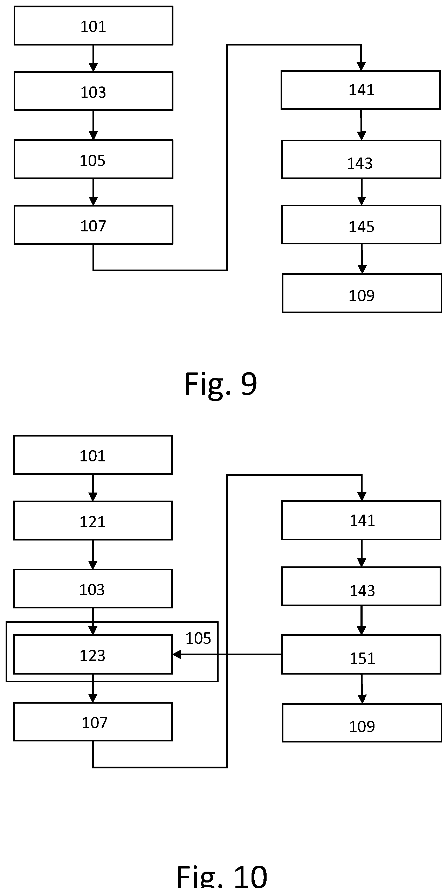

A third embodiment of the method of adapting a light plan for a certain space is shown in **Fig. 9****.** In the embodiment of **Fig. 9****,** steps **141** to **145** are performed between steps **101-107** and step **109** of **Fig. 7****.** Step **141** comprises determining a performance level for the one or more auxiliary functions. In an alternative embodiment, the performance level is determined in step **105** and step **141** is omitted. For example, the performance level may be the so-called "performance map" determined in step **105** of **Fig. 7****.**

Step **143** comprises visualizing a performance level of at least one of the one or more auxiliary functions over a visual representation of the adapted light plan. In step **143,** the performance level is visualized by indicating in the visual representation of the adapted light plan in which areas of the space performance of the at least one auxiliary function meets a minimum performance level.

In the embodiment of **Fig. 9****,** step **143** is performed after step **107.** This allows other necessary changes to the lighting design, as determined in step **107,** to be visualized in step **143** as well. These other necessary changes may include changes to the lighting design that may influence the calculated lighting distribution, the appearance of the luminaires or luminaire lay-out, and the total price of the proposed lighting infrastructure, for example. Step **145** comprises allowing a user to make further adjustments to the light plan. Step **109** comprises outputting the adjusted light plan.

A fourth embodiment of the method of adapting a light plan for a certain space is shown in **Fig. 10****.** In the embodiment of **Fig. 10****,** steps **141** and **143** of **Fig. 9** have been added to the second embodiment of **Fig. 8****.** Step **145** of **Fig. 9** has not been included in the embodiment of **Fig. 10****.** Instead, a step **151** is performed after step **143.** Step **151** comprises allowing a user to adjust the user-specified requirements that were received in step **121.** If the user does adjust the user-specified requirements, then step **105** (or step **103** in an alternative embodiment) is repeated after step **151.** If he does not, step **109** is performed next. Step 109 comprises outputting the adapted light plan. If step **105** is repeated, then an alternative position may be determined for a different lighting device in the next iteration of step **105** than in the previous iteration of step **105.**

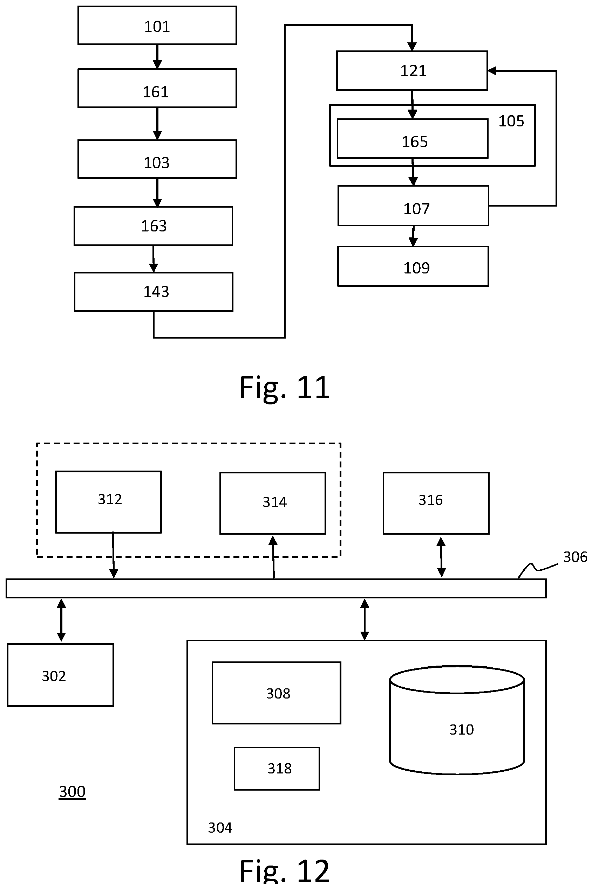

A fifth embodiment of the method of adapting a light plan for a certain space is shown in **Fig. 11****.** Step **101** comprises obtaining the light plan. Step **161** comprises receiving application requirements. The application requirements may include, for example, one or more of: communication signal strength, communication bandwidth, positioning accuracy, detection accuracy, tracking accuracy, sensor coverage and sensor accuracy. Step **103** comprises determining one or more auxiliary functions of one or more of the lighting devices in the light plan based on the received application requirements.

Step **163** comprises determining a performance level for the one or more auxiliary functions based on the light plan obtained in step **101** and the application requirements received in step **161.** Step **143** comprises displaying the light plan and visualizing the performance level of at least one of the one or more auxiliary functions over the visual representation of the light plan. In this step, a representation of the area can be presented onscreen showing a generated performance index or performance map for one or more of the non-illumination applications.

Step **121** is performed after step **143.** Step **121** comprises receiving user-specified requirements for the one or more auxiliary functions. In the embodiment of **Fig. 11****,** after seeing the visualized performance level, the user is able to indicate whether or not he is interested in the non-illumination applications. The user may also be able to differentiate his choices per subarea. For instance, the total area may be a large building, whereas the required applications are different per room type (e.g. meeting rooms vs corridors) or per floor level.

Step **105** is performed after step **121.** In the embodiment of **Fig. 11****,** step **105** comprises a sub step **165.** Step **165** comprises determining an alternative position for at least one of the one or more lighting devices based on a position determination function, such that the one or more lighting devices can better perform the one or more auxiliary functions with the at least one lighting device in the alternative position instead of the planned position. In step **165,** the alternative position for the at least one lighting device is determined based on the user-specified requirements received in step **121** and, in so far as they are not obsolete in view of the user-specified requirements, the application requirements received in step **161.** Step **107** comprises adapting the received light plan such that it specifies the alternative position for the at least one lighting device.

Thus, based on the input of the user, the initial light plan will be adapted. Ideally, the system tries to make adjustments to optimize the performance index or performance map of the selected non-illumination application(s) whilst minimizing the changes to the light distribution. Optionally, step **121** is performed again after step **107.** Other necessary changes to the lighting design may then be visualized. Step **109** comprises outputting the adapted light plan.

**Fig. 12** depicts a block diagram illustrating an exemplary data processing system that may perform the method as described with reference to **Figs. 7** to **11****.**

As shown in **Fig. 12****,** the data processing system **300** may include at least one processor **302** coupled to memory elements **304** through a system bus **306.** As such, the data processing system may store program code within memory elements **304.** Further, the processor **302** may execute the program code accessed from the memory elements **304** via a system bus **306.** In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310.** The local memory may refer to random access memory or other non-persistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the quantity of times program code must be retrieved from the bulk storage device **310** during execution. The processing system **300** may also be able to use memory elements of another processing system, e.g. if the processing system **300** is part of a cloud-computing platform.

Input/output (I/O) devices depicted as an input device **312** and an output device **314** optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 12** with a dashed line surrounding the input device **312** and the output device **314**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300,** and a data transmitter for transmitting data from the data processing system **300** to said systems, devices and/or networks. Modems, cable modems, and Ethernet cards are examples of different types of network adapter that may be used with the data processing system **300.**

As pictured in **Fig. 12****,** the memory elements **304** may store an application **318.** In various embodiments, the application **318** may be stored in the local memory **308,** the one or more bulk storage devices **310,** or separate from the local memory and the bulk storage devices. It should be appreciated that the data processing system **300** may further execute an operating system (not shown in **Fig. 12**) that can facilitate execution of the application **318.** The application **318,** being implemented in the form of executable program code, can be executed by the data processing system **300,** e.g., by the processor **302.** Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A system (1) for adapting a light plan (61;63;65) for a certain space, said light plan specifying planned positions of a plurality of lighting devices (31-38), said system comprising:
at least one input interface (3);
at least one output interface (4); and
at least one processor (5) configured to:
- use said at least one input interface to obtain (101) said light plan;
**characterized in that** said at least one processor is further configured to:
- determine (103) one or more auxiliary functions of one or more of said plurality of lighting devices in said light plan, wherein said one or more auxiliary functions include one or more of: Internet access based on light communication, information access based on light communication, infrared communication, Li-Fi and indoor positioning based on visible light communication, presence detection, people tracking, object tracking, emergency detection, air quality detection, activity detection, and audio scene analysis,
- determine (105) an alternative position for at least one of said one or more lighting devices based on a position determination function, such that said one or more lighting devices can better perform said one or more auxiliary functions with said at least one lighting device in said alternative position instead of said planned position for said at least one lighting device,
- adapt (107) said received light plan, said adapted light plan specifying said alternative position for said at least one lighting device, and
- use said at least one output interface to output (109) said adapted light plan.

2. A system as claimed in claim 1, wherein said at least one processor is configured to:
- use said at least one input interface to receive user specified requirements for said one or more auxiliary functions, and
- determine said alternative position for said at least one lighting device based on said user-specified requirements.

3. A system as claimed in claim 2, wherein said user-specified requirements indicate one or more areas of said space in which at least one of said one or more auxiliary functions should be available.

4. A system as claimed in claim 2 or 3, wherein said user-specified requirements indicate a priority for at least one of said one or more auxiliary functions.

5. A system as claimed in claim 1 or 2, wherein said at least one processor is configured to use said at least one output interface to visualize a performance level of at least one of said one or more auxiliary functions over a visual representation of said adapted light plan.

6. A system as claimed in claim 5, wherein said at least one processor is configured to determine said performance level based on user-specified requirements for said one or more auxiliary functions.

7. A system as claimed in claim 5, wherein said performance level is visualized by indicating in said visual representation of said adapted light plan in which areas of said space performance of said at least one auxiliary function meets a minimum performance level.

8. A system as claimed in claim 1 or 2, wherein said at least one processor is configured to use said at least one input interface to allow a user to make further adjustments to said light plan.

9. A system as claimed in claim 1 or 2, wherein said at least one processor is configured to use said at least one input interface to allow a user to adjust user-specified requirements for said one or more auxiliary functions.

10. A system as claimed in claim 1 or 2, wherein said at least one processor is configured to determine said alternative position for said at least one lighting device based on application requirements, said application requirements including one or more of:
communication signal strength, communication bandwidth, positioning accuracy, detection accuracy, tracking accuracy, sensor coverage and sensor accuracy.

11. A system as claimed in claim 1 or 2, wherein said at least one processor is configured to use said at least one output interface to present said adapted light plan to a user.

12. A system as claimed in claim 1 or 2, wherein said at least one processor is configured to use said at least one input interface to receive feedback from said user in response to said presentation of said light plan.

13. A method of adapting a light plan for a certain space, said light plan specifying planned positions of a plurality of lighting devices, said method comprising:
- obtaining (101) said light plan; **characterized in that** said method further comprises:
- determining (103) one or more auxiliary functions of one or more of said plurality of lighting devices in said light plan, wherein said one or more auxiliary functions include one or more of: Internet access based on light communication, information access based on light communication, infrared communication, Li-Fi, indoor positioning based on visible light communication, presence detection, people tracking, object tracking, emergency detection, air quality detection, activity detection, and audio scene analysis;
- determining (105) an alternative position for at least one of said one or more lighting devices based on a position determination function, such that said one or more lighting devices can better perform said one or more auxiliary functions with said at least one lighting device in said alternative position instead of said planned position for said at least one lighting device;
- adapting (107) said received light plan, said adapted light plan specifying said alternative position for said at least one lighting device; and
- outputting (109) said adapted light plan.

14. A computer program or suite of computer programs comprising at least one software code portion or a computer program product storing at least one software code portion, the software code portion, when run on a computer system, being configured to carry out the method of claim 13.

## Patentansprüche

1. System (1) zum Anpassen eines Lichtplans (61; 63; 65) für einen gewissen Raum, wobei der Lichtplan geplante Positionen einer Vielzahl von Beleuchtungsvorrichtungen (31-38) spezifiziert, das System umfassend:
mindestens eine Eingabeschnittstelle (3);
mindestens eine Ausgabeschnittstelle (4); und
mindestens einen Prozessor (5), der konfiguriert ist zum:
- Verwenden der mindestens einen Eingabeschnittstelle, um den Lichtplan zu erhalten (101);
**dadurch gekennzeichnet, dass** der mindestens eine Prozessor ferner konfiguriert ist zum:
- Bestimmen (103) einer oder mehrerer Hilfsfunktionen einer oder mehrerer der Vielzahl von Beleuchtungsvorrichtungen in dem Lichtplan, wobei die eine oder die mehreren Hilfsfunktionen eines oder mehrere einschließen von: Internetzugriff basierend auf Lichtkommunikation, Informationszugriff basierend auf Lichtkommunikation, Infrarotkommunikation, Li-Fi und Innenpositionierung basierend auf sichtbarer Lichtkommunikation, Anwesenheitserfassung, Personenverfolgung, Objektverfolgung, Notfallerfassung, Luftqualitätserfassung, Aktivitätserfassung und Audioszenenanalyse,
- Bestimmen (105) einer alternativen Position für mindestens eine der einen oder der mehreren Beleuchtungsvorrichtungen basierend auf einer Positionsbestimmungsfunktion, derart, dass die eine oder die mehreren Beleuchtungsvorrichtungen die eine oder die mehreren Hilfsfunktionen mit der mindestens einen Beleuchtungsvorrichtung in der alternativen Position anstelle der geplanten Position für die mindestens eine Beleuchtungsvorrichtung besser durchführen können,
- Anpassen (107) des empfangenen Lichtplans, wobei der angepasste Lichtplan die alternative Position für die mindestens eine Beleuchtungsvorrichtung spezifiziert, und
- Verwenden der mindestens einen Ausgabeschnittstelle, um den angepassten Lichtplan auszugeben (109).

2. System nach Anspruch 1, wobei der mindestens eine Prozessor konfiguriert ist zum:
- Verwenden der mindestens einen Eingabeschnittstelle, um benutzerspezifizierte Anforderungen für die eine oder die mehreren Hilfsfunktionen zu empfangen, und
- Bestimmen der alternativen Position für die mindestens eine Beleuchtungsvorrichtung basierend auf den benutzerspezifizierten Anforderungen.

3. System nach Anspruch 2, wobei die benutzerspezifizierten Anforderungen einen oder mehrere Bereiche des Raums angeben, in denen mindestens eine der einen oder der mehreren Hilfsfunktionen verfügbar sein sollte.

4. System nach Anspruch 2 oder 3, wobei die benutzerspezifizierten Anforderungen eine Priorität für mindestens eine der einen oder der mehreren Hilfsfunktionen angeben.

5. System nach Anspruch 1 oder 2, wobei der mindestens eine Prozessor konfiguriert ist, um die mindestens eine Ausgabeschnittstelle zu verwenden, um ein Leistungsniveau von mindestens einer der einen oder der mehreren Hilfsfunktionen über eine visuelle Darstellung des angepassten Lichtplans zu visualisieren.

6. System nach Anspruch 5, wobei der mindestens eine Prozessor konfiguriert ist, um ein Leistungsniveau basierend auf benutzerspezifizierten Anforderungen für die eine oder die mehreren Hilfsfunktionen zu bestimmen.

7. System nach Anspruch 5, wobei das Leistungsniveau durch Angeben in der visuellen Darstellung des angepassten Lichtplans, in welchen Bereichen der Raumleistung der mindestens einen Hilfsfunktion ein Mindestleistungsniveau erfüllt wird, visualisiert wird.

8. System nach Anspruch 1 oder 2, wobei der mindestens eine Prozessor konfiguriert ist, um die mindestens eine Eingabeschnittstelle zu verwenden, um es einem Benutzer zu ermöglichen, weitere Änderungen an dem Lichtplan vorzunehmen.

9. System nach Anspruch 1 oder 2, wobei der mindestens eine Prozessor konfiguriert ist, um die mindestens eine Eingabeschnittstelle zu verwenden, um es einem Benutzer zu ermöglichen, benutzerspezifizierte Anforderungen für die eine oder die mehreren Hilfsfunktionen zu ändern.

10. System nach Anspruch 1 oder 2, wobei der mindestens eine Prozessor konfiguriert ist, um die alternative Position für die mindestens eine Beleuchtungsvorrichtung basierend auf Anwendungsanforderungen zu bestimmen, wobei die Anwendungsanforderungen eines oder mehrere von Kommunikationssignalstärke, Kommunikationsbandbreite, Positionierungsgenauigkeit, Erfassungsgenauigkeit, Verfolgungsgenauigkeit, Sensorabdeckung und Sensorgenauigkeit einschließen.

11. System nach Anspruch 1 oder 2, wobei der mindestens eine Prozessor konfiguriert ist, um die mindestens eine Ausgabeschnittstelle zu verwenden, um einem Benutzer den angepassten Lichtplan zu präsentieren.

12. System nach Anspruch 1 oder 2, wobei der mindestens eine Prozessor konfiguriert ist, um die mindestens eine Eingabeschnittstelle zu verwenden, um eine Rückmeldung von dem Benutzer als Reaktion auf die Präsentation des Lichtplans zu empfangen.

13. Verfahren zum Anpassen eines Lichtplans für einen gewissen Raum, wobei der Lichtplan geplante Positionen einer Vielzahl von Beleuchtungsvorrichtungen spezifiziert, das Verfahren umfassend:
- Erhalten (101) des Lichtplans, **dadurch gekennzeichnet, dass** das Verfahren ferner umfasst:
- Bestimmen (103) einer oder mehrerer Hilfsfunktionen einer oder mehrerer der Vielzahl von Beleuchtungsvorrichtungen in dem Lichtplan, wobei die eine oder die mehreren Hilfsfunktionen eines oder mehrere einschließen von Internetzugriff basierend auf Lichtkommunikation, Informationszugriff basierend auf Lichtkommunikation, Infrarotkommunikation, Li-Fi, Innenpositionierung basierend auf sichtbarer Lichtkommunikation, Anwesenheitserfassung, Personenverfolgung, Objektverfolgung, Notfallerfassung, Luftqualitätserfassung, Aktivitätserfassung und Audioszenenanalyse;
- Bestimmen (105) einer alternativen Position für mindestens eine der einen oder der mehreren Beleuchtungsvorrichtungen basierend auf einer Positionsbestimmungsfunktion, derart, dass die eine oder die mehreren Beleuchtungsvorrichtungen die eine oder die mehreren Hilfsfunktionen mit der mindestens einen Beleuchtungsvorrichtung in der alternativen Position anstelle der geplanten Position für die mindestens eine Beleuchtungsvorrichtung besser durchführen können;
- Anpassen (107) des empfangenen Lichtplans, wobei der angepasste Lichtplan die alternative Position für die mindestens eine Beleuchtungsvorrichtung spezifiziert; und
- Ausgeben (109) des angepassten Lichtplans.

14. Computerprogramm oder Suite von Computerprogrammen, umfassend mindestens einen Softwarecodeabschnitt oder ein Computerprogrammprodukt, das mindestens einen Softwarecodeabschnitt speichert, wobei der Softwarecodeabschnitt, wenn er auf einem Computersystem laufen gelassen wird, konfiguriert ist, um das Verfahren nach Anspruch 13 auszuführen.

## Revendications

1. Système (1) permettant d'adapter un plan de lumière (61 ; 63 ; 65) pour un certain espace, ledit plan de lumière spécifiant des positions planifiées d'une pluralité de dispositifs d'éclairage (31-38), ledit système comprenant :
au moins une interface d'entrée (3) ;
au moins une interface de sortie (4) ; et
au moins un processeur (5) configuré pour :
- utiliser ladite au moins une interface d'entrée pour obtenir (101) ledit plan de lumière ;
**caractérisé en ce que** ledit au moins un processeur est configuré en outre pour :
- déterminer (103) une ou plusieurs fonctions auxiliaires d'une ou plusieurs parmi ladite pluralité de dispositifs d'éclairage dans ledit plan de lumière, dans lequel ladite ou lesdites fonctions auxiliaires comportent un ou plusieurs parmi : un accès à Internet basé sur une communication par lumière, un accès à des informations basé sur une communication par lumière, une communication par infrarouge, le Li-Fi et un positionnement intérieur basé sur une communication par lumière visible, une détection de présence, un suivi de personnes, un suivi d'objets, une détection d'urgence, une détection de qualité d'air, une détection d'activité et une analyse de scène audio,
- déterminer (105) une autre position pour au moins l'un parmi ledit ou lesdits dispositifs d'éclairage sur la base d'une fonction de détermination de position, de telle sorte que ledit ou lesdits dispositifs d'éclairage peuvent mieux mettre en oeuvre ladite ou lesdites fonctions auxiliaires avec ledit au moins un dispositif d'éclairage dans ladite autre position au lieu de ladite position planifiée pour ledit au moins un dispositif d'éclairage,
- adapter (107) ledit plan de lumière reçu, ledit plan de lumière adapté spécifiant ladite autre position pour ledit au moins un dispositif d'éclairage, et
- utiliser ladite au moins une interface de sortie pour délivrer en sortie (109) ledit plan de lumière adapté.

2. Système selon la revendication 1, dans lequel ledit au moins un processeur est configuré pour :
- utiliser ladite au moins une interface d'entrée pour recevoir des exigences spécifiées par l'utilisateur pour ladite ou lesdites fonctions auxiliaires, et
- déterminer ladite autre position pour ledit au moins un dispositif d'éclairage sur la base desdites exigences spécifiées par l'utilisateur.

3. Système selon la revendication 2, dans lequel lesdites exigences spécifiées par l'utilisateur indiquent une ou plusieurs zones dudit espace dans lesquelles l'au moins une parmi ladite ou lesdites fonctions auxiliaires doit être disponible.

4. Système selon la revendication 2 ou 3, dans lequel lesdites exigences spécifiées par l'utilisateur indiquent une priorité pour l'au moins une parmi ladite ou lesdites fonctions auxiliaires.

5. Système selon la revendication 1 ou 2, dans lequel ledit au moins un processeur est configuré pour utiliser ladite au moins une interface de sortie pour visualiser un niveau de performance d'au moins une parmi ladite ou lesdites fonctions auxiliaires sur une représentation visuelle dudit plan de lumière adapté.

6. Système selon la revendication 5, dans lequel ledit au moins un processeur est configuré pour déterminer ledit niveau de performance sur la base d'exigences spécifiées par l'utilisateur pour ladite ou lesdites fonctions auxiliaires.

7. Système selon la revendication 5, dans lequel ledit niveau de performance est visualisé en indiquant dans ladite représentation visuelle dudit plan de lumière adapté les zones dudit espace dans lesquelles la performance de ladite au moins une fonction auxiliaire respecte un niveau minimum de performance.

8. Système selon la revendication 1 ou 2, dans lequel ledit au moins un processeur est configuré pour utiliser ladite au moins une interface d'entrée pour permettre à un utilisateur d'effectuer des ajustements supplémentaires audit plan de lumière.

9. Système selon la revendication 1 ou 2, dans lequel ledit au moins un processeur est configuré pour utiliser ladite au moins une interface d'entrée pour permettre à un utilisateur d'ajuster des exigences spécifiées par l'utilisateur pour ladite ou lesdites fonctions auxiliaires.

10. Système selon la revendication 1 ou 2, dans lequel ledit au moins un processeur est configuré pour déterminer ladite autre position pour ledit au moins un dispositif d'éclairage sur la base des exigences d'application, lesdites exigences d'application comportant une ou plusieurs parmi une force de signal de communication, une largeur de bande de communication, une précision de positionnement, une précision de détection, une précision de suivi, une couverture de capteur et une précision de capteur.

11. Système selon la revendication 1 ou 2, dans lequel ledit au moins un processeur est configuré pour utiliser ladite au moins une interface de sortie pour présenter ledit plan de lumière adapté à un utilisateur.

12. Système selon la revendication 1 ou 2, dans lequel ledit au moins un processeur est configuré pour utiliser ladite au moins une interface d'entrée pour recevoir une rétroaction provenant dudit utilisateur en réponse à ladite présentation dudit plan de lumière.

13. Procédé d'adaptation d'un plan de lumière pour un certain espace, ledit plan de lumière spécifiant des positions planifiées d'une pluralité de dispositifs d'éclairage, ledit procédé comprenant :
- l'obtention (101) dudit plan de lumière ; **caractérisé en ce que** ledit procédé comprend en outre :
- la détermination (103) d'une ou plusieurs fonctions auxiliaires d'un ou plusieurs parmi ladite pluralité de dispositifs d'éclairage dans ledit plan de lumière, dans lequel ladite ou lesdites fonctions auxiliaires comportent un ou plusieurs parmi un accès à Internet basé sur une communication par lumière, un accès à des informations basé sur une communication par lumière, une communication par infrarouge, le Li-Fi, un positionnement intérieur basé sur une communication par lumière visible, une détection de présence, un suivi de personnes, un suivi d'objets, une détection d'urgence, une détection de qualité d'air, une détection d'activité et une analyse de scène audio ;
- la détermination (105) d'une autre position pour au moins l'un parmi ledit ou lesdits dispositifs d'éclairage sur la base d'une fonction de détermination de position, de telle sorte que ledit ou lesdits dispositifs d'éclairage peuvent mieux mettre en oeuvre ladite ou lesdites fonctions auxiliaires avec ledit au moins un dispositif d'éclairage dans ladite autre position au lieu de ladite position planifiée pour ledit au moins un dispositif d'éclairage ;
- l'adaptation (107) dudit plan de lumière reçu, ledit plan de lumière adapté spécifiant ladite autre position pour ledit au moins un dispositif d'éclairage ; et
- la sortie (109) dudit plan de lumière adapté.

14. Programme informatique ou suite de programmes informatiques comprenant au moins une partie de code logiciel ou produit programme informatique stockant au moins une partie de code logiciel, la partie de code logiciel, lorsqu'elle est exécutée sur un système informatique, étant configurée pour effectuer le procédé selon la revendication 13.
